# EUROPEAN PATENT SPECIFICATION

(11) **EP 4 664 855 B1**
(45) Date of publication and mention of the grant of the patent: **13.05.2026**
(21) Application number: 24181095.1
(22) Date of filing: 10.06.2024
(51) Int. Cl.: H04L 65/70, H04L 47/25, H04L 47/38, H04L 65/752, H04L 65/75, H04L 65/80

(54) **METHOD, DEVICE AND NON-TRANSITORY COMPUTER-READABLE STORAGE MEDIUM FOR CONTROLLING REAL TIME VIDEO STREAMING**
VERFAHREN, VORRICHTUNG UND NICHTTRANSITORISCHES COMPUTERLESBARES SPEICHERMEDIUM ZUR STEUERUNG VON ECHTZEIT-VIDEO-STREAMING
PROCÉDÉ, DISPOSITIF ET SUPPORT D'INFORMATIONS LISIBLE PAR ORDINATEUR NON TRANSITOIRE POUR COMMANDER UNE DIFFUSION EN CONTINU DE VIDÉO EN TEMPS RÉEL

(43) Date of publication of application: 17.12.2025
(73) Proprietor: Axis AB, 223 69 Lund (SE)
(72) Inventor: PETTERSSON, Mattias, 223 69 Lund (SE); JONSSON, Axel, 223 69 Lund (SE)
(74) Representative: AWA Sweden AB

(56) References cited:
- EP-A1- 3 136 742
- CN-A- 114 390 320
- US-A1- 2010 121 974
- US-A1- 2010 198 980
- "3rd Generation Partnership Project; Technical Specification Group Services and System Aspects; IP Multimedia Subsystem (IMS); Multimedia Telephony; Media handling and interaction (Release 18)", 21 September 2023 (2023-09-21), XP052645509, Retrieved from the Internet <URL:https://ftp.3gpp.org/tsg_sa/WG4_CODEC/Specs_update_after_SA_Plenary/Specs_Update_After_SA_101/26114-i40.zip 26114-i40.docx> [retrieved on 20230921]

## Description

### Technical Field

The present invention relates to techniques for managing network congestion, and in particular to techniques for controlling a bitrate of encoded video data using padding data added to the encoded video data during transmission on the network.

### Background

Streaming video data over networks with limited capacity presents a significant challenge. The core issue lies in ensuring that the amount of transmitted data does not exceed what the network can handle. If the data rate surpasses the capacity of the network, network congestion will increase, and once the level of network congestion crosses a certain threshold, packet loss may occur. To mitigate this risk, the network bandwidth may be estimated, a process known as Bandwidth Estimation (BWE). The estimated BWE value may then be used to regulate the bitrate by a bitrate controller during video encoding.

Various methods and protocols have been developed for streaming, each employing different approaches for calculating BWE. Despite these advancements, the risk of data loss persists, particularly if the bitrate controller's adaptation to changing bandwidth is sluggish or if the bandwidth decreases rapidly. For example, BWE may become challenging when multiple streaming devices share the same bandwidth, leading to increased competition and fluctuating available capacity.

One well-known solution to this problem involves using the Transmission Control Protocol (TCP), which ensures reliability by retransmitting potentially dropped packets. However, the reliability of TPC comes at the expense of reduced control and potentially lower transmission rates.

On the other hand, datagram-based protocols such as the User Datagram Protocol (UDP) do not suffer from these drawbacks. UDP allows for more efficient transmission rates and greater control over the data flow. However, it inherently carries the original problem of increased risk of data loss due to its lack of retransmission mechanisms.

There is thus a need for improvements in this context.

US 2010/198980 A1 (Skype Limited) describes a method comprising: receiving data at a first node; encoding a first portion of the data at a first bit rate to generate a first encoded data stream; monitoring an indication of the capacity of the channel; transmitting to the second node a padded data stream via the channel, wherein padding bits are added to the first encoded data stream, in dependence on the indication of the capacity of the channel, to generate the padded data stream; determining if transmitting the padded data stream exceeds the capacity of the channel; and encoding a second portion of the data at a higher bit rate than the first bit rate, to generate a second encoded data stream for transmission over the channel, if it is determined that transmitting the padded data stream does not exceed the channel's capacity.

3GPP TS 26.114 V18.4.0 describes a standardized IP Multimedia Subsystem (IMS) telephony service that builds on the IMS capabilities to establish multimedia communications between terminals within and in-between operator networks.

### Summary

In view of the above, solving or at least reducing one or several of the drawbacks discussed above would be beneficial, as set forth in the attached independent patent claims.

The invention is defined by the subject-matter of the independent claims.

According to a first aspect of the present invention, there is provided a method for controlling real time video streaming, the method comprising: providing a dataset structure for transmission of video data, wherein a dataset generated according to the dataset structure in a first configuration comprises encoded video data with a first encoding bitrate and padding data; generating first datasets according to the dataset structure in the first configuration, and transmitting the first datasets as a data stream via a communication channel; during the transmission of the first datasets, receiving a first metric indicating a level of network congestion of the communication channel, and determining from the received first metric that a level of network congestion has increased above a threshold; adjusting the dataset structure to a second configuration, wherein a dataset generated according to the adjusted dataset structure comprises encoded video data with a second encoding bitrate and padding data, wherein the second encoding bitrate is lower than the first encoding bitrate; and generating second datasets according to the dataset structure in the second configuration and transmitting the second datasets as a data stream via the communication channel.

Advantageously, the present disclosure presents techniques to maintain a high bitrate while managing network congestion. These techniques involve using padding as a buffer to detect congestion early. Initially, the transmitted datasets include encoded video data at a high bitrate, supplemented with padding data. During transmission, if an increase in a level of network congestion above a set threshold is detected, the dataset structure used for transmission of the encoded video data is adjusted to reduce the encoding bitrate of the video data while still including padding data. Typically, the bitrate controller in the encoder is requested to lower the bitrate. This adjustment thus helps to lower the bitrate, easing the congestion. The modified datasets, now with a lower bitrate, are then transmitted. By incorporating padding data, the system can identify early signs of congestion, allowing for timely bitrate adjustments and ensuring smoother streaming and reduced data loss. This approach may further allow for the bitrate to be kept high under varying network conditions. By dynamically adjusting the bitrate in response to detected congestion, advantageously the method may allow for an increased video quality while reducing interruptions and packet loss in fluctuating network environments.

As used herein, a "dataset" refers to a structured unit of data used for transmission over a network. Specifically, it is a packet or a collection of packets (e.g., Internet Protocol, IP, packets) that contains encoded video data and/or additional data. The "dataset structure" defines how the video data and additional information, such as padding data, are organized within each packet or collection of packets.

As used herein, a "communication channel" refers to the medium through which data is transmitted between a sender and a receiver in a network. This channel can utilize various transmission technologies (Wi-Fi, 4G, Fiber, etc.) and protocols to manage and facilitate the data flow. For example, Transmission Control Protocol (TCP) and the User Datagram Protocol (UDP) are protocols used in communication channels for video streaming.

"Padding data" refers to additional, non-essential data added to the video data packets being transmitted over a network. It serves as a buffer to detect early signs of congestion in the communication channel. Padding data can be created by appending extra bytes to the encoded video data within each packet or dataset. These bytes do not carry any meaningful information and are used solely to monitor the capacity of the network. Unlike simply adding zeros, padding data can be more complex, such as noise or other inconsequential data that can mimic the characteristics of actual video data. This may make the padding more representative of real video data traffic, ensuring more accurate detection of congestion.

As used herein, "level of network congestion" (level can be replaced with degree, amount, extent, etc.) refers to the degree of traffic load and performance degradation experienced by a communication channel. This level is quantified by evaluating specific metrics that indicate the efficiency and reliability of data transmission. These metrics (numbered first, second, third, etc., herein, as further explained below) could for example include packet loss rate, which measures the percentage of packets that fail to reach their destination; jitter, which assesses the variability in packet arrival times; transmission buffer occupancy, which indicates the fill level of buffers used to temporarily store data before transmission; and latency, which measures the delay in data packet delivery across the network. An increase in any of these metrics beyond a predefined metric specific threshold signifies a higher level of network congestion, prompting necessary adjustments as described herein to maintain the video quality while reducing interruptions and packet loss in fluctuating network environments. The thresholds may be application specific. Examples of thresholds may include 2% packet loss, 30 milliseconds (ms) jitter, 100 ms latency, and 80% transmission buffer occupancy. Any other thresholds may apply, e.g. 4% packet loss, 25 ms jitter, 150 ms latency, and 75% transmission buffer occupancy.

Additionally, explicit congestion notification (ECN) may be another indicator of network congestion. ECN is a mechanism used in IP networks for indicating network congestion without dropping packets. Routers experiencing congestion mark packets with ECN, and this information is communicated back to the sender by the receiving end. The sender can then reduce its transmission rate accordingly as described herein. The level of ECN can be measured based on the number or frequency of ECN-marked packets received. When a network router experiences congestion, it marks packets with ECN bits instead of dropping them. The receiver of these packets then notifies the sender about the congestion. The sender can track the frequency or count of these ECN-marked packets to assess the congestion level. The applied threshold could be received as ECV (explicit congestion notification) feedback messages.

In the context of this disclosure, the terms "first," "second," "third," and so forth do not necessarily indicate sequential order or priority. Instead, these terms are used solely for the purpose of identifying and distinguishing between different features, elements, or steps within the description. This terminology is intended to provide clarity and should not be interpreted as implying any specific sequence or hierarchy unless explicitly stated otherwise.

In some examples, the method further comprises, in response to determining that the level of network congestion has increased above the threshold: adjusting the dataset structure to a third configuration, wherein a dataset generated according to the dataset structure in the third configuration comprises encoded video data with the second encoding bitrate and no padding data; generating third datasets according to the dataset structure in the third configuration, and transmitting the third datasets as a data stream via the communication channel; during the transmission of the third datasets, receiving a second metric indicating a level of network congestion of the communication channel metric and determining from the received second metric that the level of network congestion has decreased below the threshold; and adjusting the dataset structure to the second configuration.

In this example, in response to determining that the level of network congestion has increased above a threshold, the system first adjusts the dataset structure to a third configuration. In this configuration, each dataset comprises encoded video data with a reduced encoding bitrate and no padding data. This adjustment effectively reduces the overall data rate being transmitted, helping to alleviate network congestion. The system then generates and transmits these third datasets via the communication channel. During the transmission of the third datasets, if it is determined (via the second metric) that the level of network congestion has decreased below the threshold, the dataset structure may be adjusted to the second configuration, in which the dataset includes encoded video data with the reduced bitrate and padding data. Advantageously, and increased flexibility may be achieved, which allows the system to promptly respond to improving network conditions by reintroducing padding data, which aids in maintaining smoother streaming as described herein.

In some examples, the method further comprises: in response to determining that the level of network congestion has increased above the threshold, instructing a video encoder to start encoding of video data with the second encoding bitrate; adjusting the dataset structure to a fourth configuration, wherein a dataset generated according to the dataset structure in the fourth configuration comprises encoded video data with the first encoding bitrate and no padding data; and in response to receiving an indication that the video encoder encodes video data with the second encoding bitrate, adjusting the dataset structure to the second configuration.

Advantageously, latency in the response of the bitrate controller of the encoder may be considered. Since it may take some time for the bitrate controller to achieve the lower bitrate, initially removing the padding data reduces the overall data load on the network immediately, providing quick relief from congestion. Then, when the bitrate is lowered by the encoder, the padding is reintroduced to maintain the ability to monitor and manage further network fluctuations.

In some examples, the method further comprises: during the transmission of the second datasets, receiving a third metric indicating a level of network congestion of the communication channel and determining from the received third metric that the level of network congestion has decreased below the threshold; adjusting the dataset structure to the first configuration; and generating fourth datasets according to the dataset structure in the first configuration and transmitting the fourth datasets as a data stream via the communication channel. Advantageously, a process for adapting to improving network conditions may be implemented. Specifically, it allows the system to take advantage of improved network conditions by restoring the higher bitrate and maintaining padding data.

The dataset structure defines that the encoded video data is prioritized over the padding data during the transmission of dataset generated according to the dataset structure. Advantageously, when network congestion occurs, the lower priority padding data may be dropped first during transmission, preserving the integrity and quality of the encoded video data.

In some examples, the dataset structure defines that the encoded video data is positioned before the padding data in a dataset generated according to the dataset structure. This positioning ensures that the padding data is transmitted last, making it more likely that any dropped packets due to network congestion will be the padding data. This approach further helps to maintain the quality and integrity of the video stream by reducing the likelihood of losing encoded video data.

In some examples, the method further comprises determining a size of the padding data using at least one of: transmission technology of the communication channel; a size of the encoded video data; a measurement indicating a variance of available bandwidth of the communication channel; a measured roundtrip time, RTT, of a signal transmitted on the communication channel; or a user input indicating an importance of the video data. Advantageously, by tailoring the size of the padding data based on one or more of these specific factors, network resources may be more accurately and dynamically managed. For example, if Wi-Fi is used as transmission technology, the available bandwidth may vary more than if cellular networks such as 4G or 5G are used, which may influence the size of the padding data to be larger when Wi-Fi is used compared to 5G. The RTT may be measured by transmitting a ping signal on the communication channel, or by extracting the RTT from the transmission protocol of the communication channel, such as TCP or RTCP. A larger RTT may advantageously lead to a larger padding data.

In some examples, determining the measurement indicating a variance of available bandwidth of the communication channel comprises using historical data identifying a frequency of changes of configurations of the dataset structure. Such historical data provides insights into the stability and fluctuations of the network bandwidth. Advantageously, past behaviour may be leveraged to predict future network conditions, allowing for more accurate and proactive adjustments to the padding size and thus an improved real-time streaming as described herein.

In some examples, the datasets are transmitted over the communication channel using at least one of a TCP protocol and a UDP protocol. In some examples, both the padding data and the video data are transmitted using the same protocol. In other examples, encoded video data may be transmitted using the TCP protocol and the padding data is transmitted using the UDP protocol. Consequently, encoded video data may be transmitted using TCP for its reliability, facilitating error correction and ordered delivery of the video data, while padding data is transmitted using UDP to take advantage of its speed and efficiency, despite its lack of delivery guarantees.

According to a second aspect of the invention, the above object is achieved by a non-transitory computer-readable storage medium having stored thereon instructions for implementing the method according to the first aspect when executed on a device having processing capabilities.

According to a third aspect of the invention, the above object is achieved by a device for controlling real time video streaming, the device configured for: providing a dataset structure for transmission of video data, wherein a dataset generated according to the dataset structure in a first configuration comprises encoded video data with a first encoding bitrate and padding data; generating first datasets according to the dataset structure in the first configuration, and transmitting the first datasets as a data stream via a communication channel; during the transmission of the first datasets, receiving a first metric indicating a level of network congestion of the communication channel, and determining from the received metric that a level of network congestion has increased above a threshold; adjusting the dataset structure to a second configuration, wherein a dataset generated according to the adjusted dataset structure comprises encoded video data with a second encoding bitrate and padding data, wherein the second encoding bitrate is lower than the first encoding bitrate; and generating second datasets according to the dataset structure in the second configuration and transmitting the second datasets as a data stream via the communication channel.

In some examples, the device is implemented in a camera capturing the video data. In other examples, the device is connected to the camera capturing the video data.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows a system for real-time streaming of video data, according to embodiments;
Figure 2 shows a buffer build up during a decreasing bandwidth of the communication channel used for the real-time streaming, according to embodiments;
Figures 3-6 show methods for controlling real time video streaming according to embodiments;
Figure 7 shows prioritisation of data in a data structure used for generating datasets transmitted in the real-time streaming, according to embodiments;
Figures 8-10 show flow charts of methods for controlling real time video streaming according to embodiments.

### Detailed Description

The present invention will now be described more fully hereinafter with reference to the accompanying drawings, in which embodiments of the invention are shown. The systems and devices disclosed herein will be described during operation.

The techniques described herein revolve around optimizing real-time video streaming by dynamically managing data transmission and bandwidth estimation (BWE) to handle network congestion. Traditional methods struggle with maintaining high video quality while minimizing or reducing network congestion indicators such as latency, jitter, packet loss rate and transmission buffer occupancy under varying network conditions. Key methods described herein include using padding data as a buffer to detect congestion early and adjusting the dataset structure for the streaming data as a response to an increased network congestion level, to mitigate the congestion quickly. These techniques allow for responsive adjustments to bitrate and padding, maintaining streaming quality even under fluctuating network conditions. Advantages may include enhanced video quality, reduced data loss, efficient bandwidth utilization, and/or reduced latency, facilitating a smoother and more reliable streaming experience.

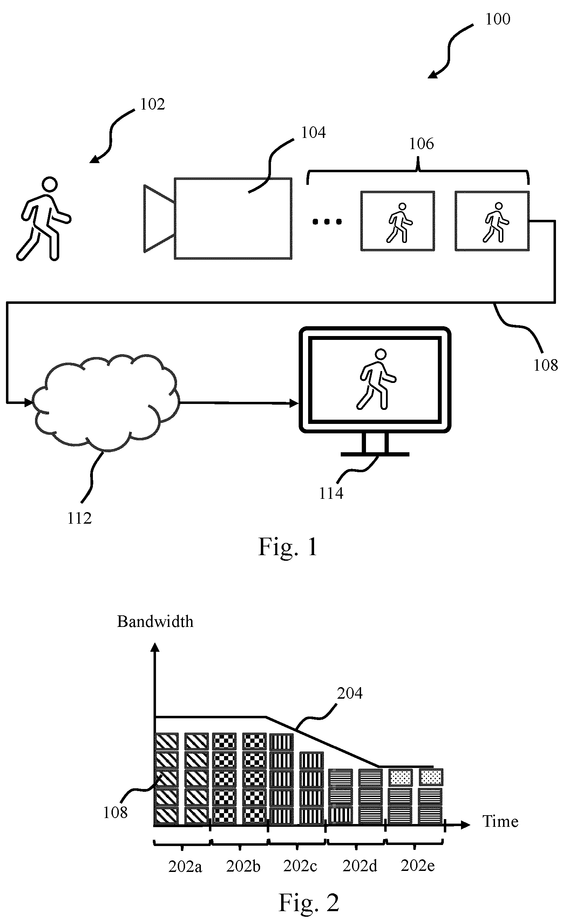

Figure 1 shows by way of example a system 100 for real-time streaming of encoded video data 106. The system 100 comprises a camera 104 capturing a video stream depicting a scene 102. The camera (or a separate encoding entity) encodes the video stream into encoded video data 106. The encoded video data 106 is organized into datasets 108 configured according to a dataset structure. A dataset 108 is a structured unit of data used for transmission over a network, comprising encoded video data 106 that has been organized into packets or frames suitable for efficient transmission, via a communication channel of a network 112, and decoding on a receiver side 114. The transmission technology of the communication channel 112 may be Wi-Fi, 5G, 4G, Fiber, Ethernet, etc. The receiver may for example be a display 114 configured to decode and display the received encoded video data. The dataset structure refers to the specific format and organization of these datasets, defining how the encoded video data and any additional information, such as padding data or control signals, are arranged within each dataset. The dataset structure also specifies the bitrate of the encoded video data. The particular details and arrangement within the dataset structure are referred to as the configuration of the dataset structure.

In a real-time video streaming system, BWE is a technique used to optimize the quality and stability of the transmitted encoded video data 106. BWE involves accurately assessing the available network bandwidth to adapt the bitrate of the encoded video data 106, to ensure that the transmitted bitrate does not exceed the capacity of the network 112, which could otherwise lead to increased level of network congestion. However, the risk of dropping data still exists if the bitrate adapts too slowly or if the bandwidth decreases rapidly.

As discussed above, the level of network congestion can be determined or measured using a variety of metrics. In the following examples, latency is typically used to illustrate the techniques described herein, with an increase (or decrease) in latency relative to a certain threshold serving as the key indicator. However, it should be noted that other suitable methods for determining the level of network congestion may also be applied, such as jitter, packet loss rate, level of Explicit Congestion Notification (ECN) (e.g., number or frequency of packets marked with an ECN bit by the router) or transmission buffer occupancy. Figure 2 schematically shows how such latency and packet loss can occur in these situations.

Depending on the frames per second (FPS) of the streamed video, the data of each frame will have a time slot 202a-e for transmission to not introduce latency or data loss. For example, if a video with 30 FPS is streamed, each image frame has a time slot 202a-e of 33 milliseconds for transmission. When the bandwidth 204 decreases, the transmission of datasets 108 meant for one time slot 202a-e can spill over into the next time slot, delaying the datasets 108 of the subsequent image frame. As a result, a buffer in the transmission channel, for example in a router of the transmission channel, begins to build up. If the buffer reaches its capacity, data will be dropped. In Figure 2, the datasets 108 for each time slot 202a-e are marked with distinct patterns, such as a diagonally striped pattern for the datasets 108 meant for time slot 202a and a checker pattern for the datasets 108 meant for time slot 202b. When the bandwidth is reduced during the third time slot 202c, a dataset 108 (marked with vertical stripes) meant for this slot is delayed to the next time slot 202d, and so on. This problem becomes worse when the bandwidth is further decreased in time slots 202d-e. Consequently, latency increases and datasets 108 may be dropped.

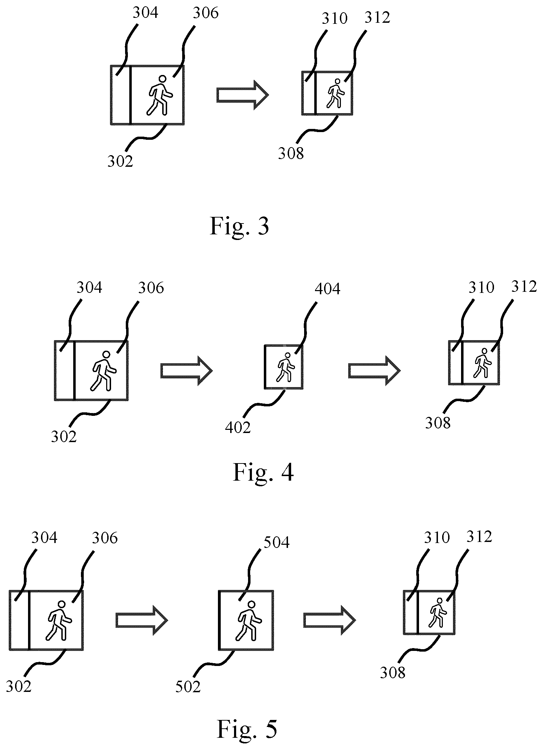

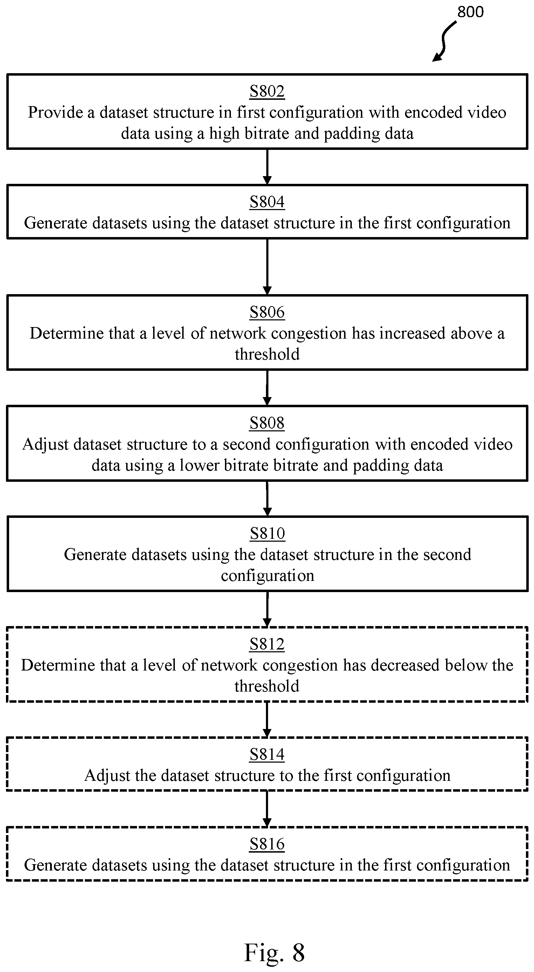

As discussed above, the inventors have realized that adding padding data to the datasets of real-time streaming video can advantageously act as a buffer to detect congestion early. Using this technique, streaming quality may be improved, and data loss may be avoided. Figures 3-6 show embodiments for how to dynamically manage data transmission and BWE using padding data. These embodiments will now be described in conjunction with the flow charts of figures 8-10.

Figure 8 describes a method 800 for controlling real time video streaming with the use of padding data. A dataset structure for transmission of video data is provided S802. Using this dataset structure, datasets can be generated S804 and transmitted as a data stream via a communication channel, as exemplified in figure 1. First datasets are generated S804 in according to the dataset structure in first configuration. This is shown in the left part of figure 1. The first datasets 302 generated S804 according to the dataset structure in first configuration comprises encoded video data 306 with a first (high) encoding bitrate and padding data 304.

The padding data 304 is generally non-sensical data, generated to be similar in composition to video data. Any suitable algorithm may be used to generate the padding data 304, for example random pixel values, synthetic patterns or even scrambled video frames or portions of video frames.

The size of the padding data 304 may depend on various rules, configurations, or properties of the video streaming system. For example, the size of the padding data 304 may depend in the transmission technology of the communication channel, wherein each transmission technology may be mapped to a certain size. More reliable transmission technologies such as 4G/5G may require less padding data, while less reliable transmission technologies such as Wi-Fi may require more padding data. In some examples, the size of the padding data 304 may be a relative size that depends on the size of the encoded video data 306, wherein the size of the padding data 304 typically grows with the size of the encoded video data 306. In some examples, the size of the padding data 304 may depend on a measurement indicating a variance of available bandwidth of the communication channel, wherein a larger variance typically results in a larger padding data. The variance may be determined using historical data identifying a frequency of changes of configurations of the dataset structure. The variance may further be determined using historical data relating to measured roundtrip time (RTT) of the communication signal. Such a variance may be determined at regular intervals and be used until next time the variance is determined. In some examples, the size of the padding data 304 may depend on the RTT of a signal transmitted on the communication channel, for example the RTT of a ping signal transmitted on the communication channel, or RTT received via the protocol used for transmission of the datasets on the communication channel. A larger RTT typically results in a larger padding data 304. In some examples, the size of the padding data 304 may depend on user input indicating an importance of the video data, wherein a more important video data typically results in a larger padding data. This approach of configuring the size of the padding data may provide a flexible and adaptive method to enhance the robustness of real-time video streaming. By adjusting the size of the padding data based on various factors, including transmission technology, video data size, bandwidth variance, RTT, and user input, the system can effectively manage network congestion and maintain high video quality.

Returning now to figure 8. During transmission of the first datasets 302, the system (e.g., the camera or device handling the streaming setup, collectively network device(s)), may receive an indication that a level of network congestion of the communication channel has increased above a threshold. The level of network congestion may be determined S806 from a received metric indicating the level of network congestion. As mentioned above, the metric may indicate that the RTT is increasing above a certain level, that the transmission buffer used in the real-time streaming filling up, that packet loss rate is increasing, high jitter, and/or observing longer queue lengths in the network device. This means that network congestion over a certain threshold is detected. For example, latency of the communication channel may have increased over a specific threshold. As a result, the dataset structure is adjusted S808 to a second configuration. Second datasets 308 generated S810 according to the adjusted dataset structure (in the second configuration) comprises encoded video data 312 with a second encoding bitrate and padding data 310. The size of the padding data 310 of the second datasets 308 may be less than the size of the padding data 304 of the first datasets 302, or having the same size, depending on the rules defined for determining the size. The second encoding bitrate, i.e. the bitrate of the encoded video data 312 of the second dataset 308 in the right part of figure 3, is lower than the bitrate of the encoded video data 306 of the first dataset 302. Consequently, the required bandwidth for real-time transmission of the second datasets 308 is less than that for the first datasets 302, which helps in managing network congestion. In case network congestion above the threshold is still indicated (for example since the latency is still over the threshold) despite the reduction of the encoding bitrate, the steps S808-S810 may be repeated to continue lower the encoding bitrate of the video data, until the high network congestion is no longer detected.

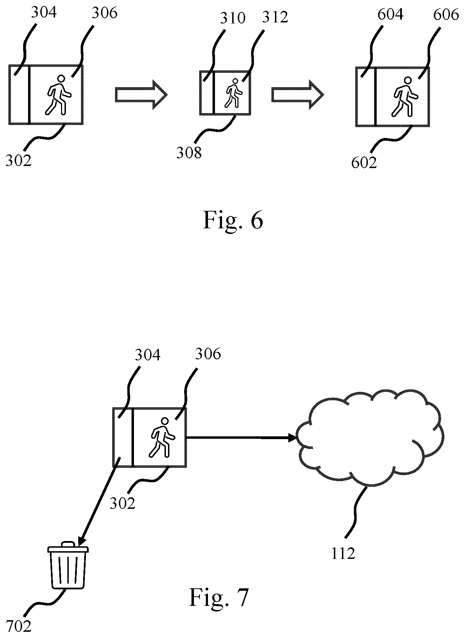

In some cases, as shown in figure 6, during the transmission of the second datasets 308, a new metric indicating a level of network congestion of the communication channel is received. From the newly received metric, it may be determined S812 that the level of network congestion has decreased below the threshold. In this case, the dataset structure may be adjusted S814 back to the first configuration, and datasets 602 can be generated according to the dataset structure in the first configuration, such that the bitrate of the encoded video data 606 of these datasets 602 are the same as the original bitrate of the encoded video data 306 of the first datasets 302.

In some examples, intermediate steps are implemented between the generation of the first datasets 302 and the generation of the second datasets 308 as described in figure 3. Such intermediate steps may be implemented to more quickly or accurately mitigate the high network congestion that has been detected.

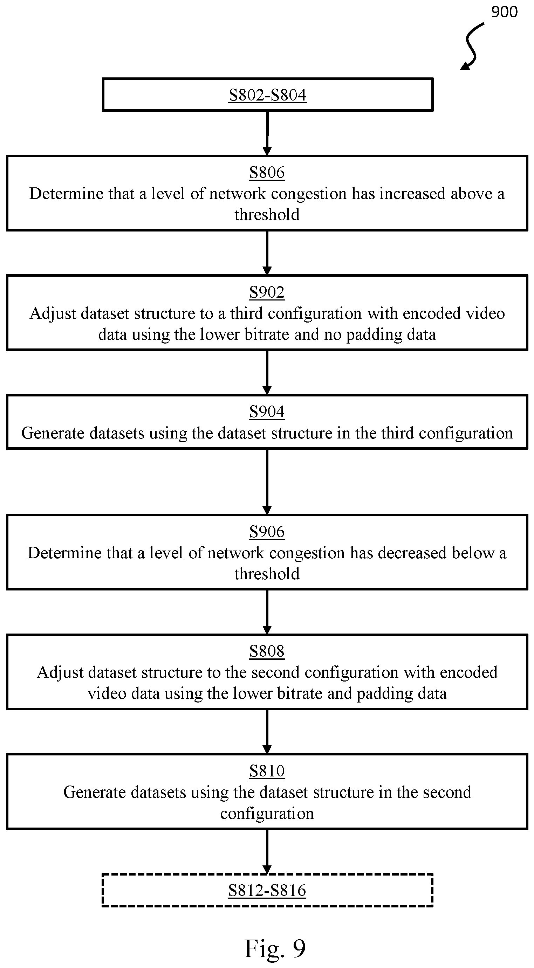

Figure 9 and figure 4 show one such example of intermediate steps. In this example, in response to determining S806 that the level of network congestion has increased above the threshold, the dataset structure is first adjusted S902 to a third configuration. Third datasets 402 generated S904 according to the dataset structure in the third configuration comprises encoded video data 404 with the lower second encoding bitrate, and no padding data. Consequently, the required bandwidth for real-time transmission of the third datasets 402 is initially reduced more compared to using the second configuration directly. During the transmission of the third datasets 402, when a new metric indicating a level of network congestion of the communication channel is received, from which it is determined S906 that the network congestion of the communication channel has decreased below the threshold(e.g. the latency is down below the threshold again) , the padding data may be re-introduced by adjusting S808 the dataset structure to the second configuration and generating S810 the second datasets 308 accordingly for transmission.

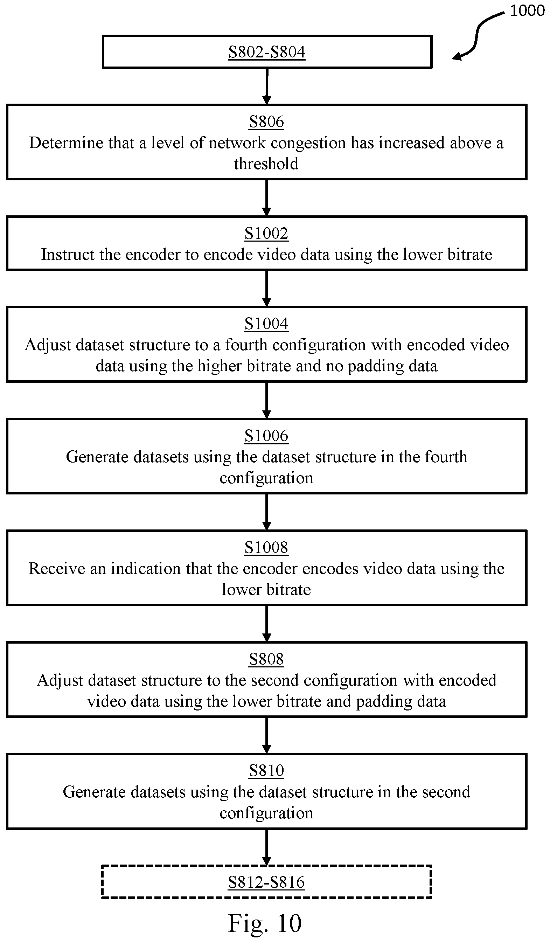

Figure 10 and figure 5 show another example of intermediate steps. In this example, in response to determining S806 that the level of network congestion has increased above the threshold, the video encoder is instructed S1002 to encode video data using the lower second encoding bitrate. In this example, any delay in adapting the bitrate of the encoded video data is advantageously considered by first adjusting S1004 the dataset structure to a fourth configuration, wherein fourth datasets 502 generated S1006 according to the dataset structure in the fourth configuration comprises encoded video data 504 with the first encoding bitrate and no padding data. When receiving S1008 an indication that the video encoder encodes video data using the lower second encoding bitrate, the dataset structure can be adjusted S808 to the second configuration (lowering the bitrate and including padding data again) and the second datasets 308 may be generated S810 and transmitted as described above.

In some examples, the dataset structure may define that encoded video data is prioritized over the padding data during the transmission of dataset generated according to the dataset structure. Such example is shown in figure 7. Advantageously, in the event of packet dropping, it may be preferrable to be able to prioritize which parts of a dataset that are dropped, at least on a statistical level. For example, the dataset structure may define that the encoded video data is positioned before the padding data in a dataset 302 generated according to the dataset structure. In an example, a dataset is sent in a plurality of packets. The first packets may have a higher probability to get through the communications network 112 to a receiving device than the later packets. Thus, later parts of the dataset 302 may be dropped on the communications network 112. By ordering the data in each dataset 302 such that the padding data 304 is transmitted after the encoded video data 306, such a prioritization may be accomplished. Consequently, if any packets are dropped 702, the padding data 304 may be dropped 702 first. Any other suitable way of prioritization of encoded video data 306 over the padding data 304 may be implemented. For example, transmission protocols such as the DiffServ protocol may be used to prioritize different types of data packets by marking them with different levels of priority in their headers.

Prioritization may be accomplished by flagging the data with Quality of Service flags, or by implementing a custom transmission queue.

## Claims

1. A method for controlling real time video streaming, the method comprising:
providing (S802) a dataset structure for transmission of video data, wherein a dataset generated according to the dataset structure in a first configuration comprises encoded video data (306) with a first encoding bitrate and padding data (304) having a first size;
generating (S804) first datasets (302) according to the dataset structure in the first configuration, and transmitting the first datasets as a data stream via a communication channel (112);
during the transmission of the first datasets, receiving a first metric indicating a level of network congestion of the communication channel, and determining (S806) from the received first metric that a level of network congestion has increased above a threshold;
as a result of determining from the received first metric that the level of network congestion has increased above the threshold, adjusting (S808) the dataset structure to a second configuration, wherein a dataset generated according to the adjusted dataset structure comprises encoded video data (312) with a second encoding bitrate and padding data (310) having a second size, wherein the second encoding bitrate is lower than the first encoding bitrate; and
generating (S810) second datasets (308) according to the dataset structure in the second configuration and transmitting the second datasets as a data stream via the communication channel,
wherein the dataset structure defines that encoded video data is prioritized over padding data during the transmission of the dataset generated according to the dataset structure.

2. The method of claim 1, further comprising:
in response to determining (S806) that the level of network congestion has increased above the threshold:
adjusting (S902) the dataset structure to a third configuration, wherein a dataset generated according to the dataset structure in the third configuration comprises encoded video data (404) with the second encoding bitrate and no padding data;
generating (S904) third datasets (402) according to the dataset structure in the third configuration, and transmitting the third datasets as a data stream via the communication channel;
during the transmission of the third datasets, receiving a second metric indicating a level of network congestion of the communication channel and determining (S906) from the received second metric that the level of network congestion has decreased below the threshold; and
adjusting (S808) the dataset structure to the second configuration.

3. The method of claim 1, further comprising:
in response to determining (S806) that the level of network congestion has increased above the threshold, instructing (S1002) a video encoder to start encoding of video data with the second encoding bitrate;
adjusting (S1004) the dataset structure to a fourth configuration, wherein a dataset (502) generated (S1006) according to the dataset structure in the fourth configuration comprises encoded video data (504) with the first encoding bitrate and no padding data; and
in response to receiving (S1008) an indication that the video encoder encodes video data with the second encoding bitrate, adjusting (S808) the dataset structure to the second configuration.

4. The method of any one of claims 1-3, further comprising:
during the transmission of the second datasets, receiving a third metric indicating a level of network congestion of the communication channel and determining (S812) from the received third metric that the level of network congestion has decreased below the threshold;
adjusting (S814) the dataset structure to the first configuration; and
generating (S816) fourth datasets (602) according to the dataset structure in the first configuration and transmitting the fourth datasets as a data stream via the communication channel.

5. The method of any one of claims 1-4, wherein the second size is less than the first size.

6. The method of any one of claims 1-5, wherein the dataset structure defines that encoded video data is positioned before padding data in a dataset generated according to the dataset structure.

7. The method of any one of claims 1-6, further comprising
determining a size of padding data of a dataset generated according to the dataset structure using at least one of:
transmission technology of the communication channel;
a size of encoded video data of the dataset generated according to the dataset structure;
a measurement indicating a variance of available bandwidth of the communication channel;
a measured roundtrip time, RTT, of a signal transmitted on the communication channel; or
a user input indicating an importance of the video data.

8. The method of claim 7, further comprising:
determining the measurement indicating a variance of available bandwidth of the communication channel using historical data identifying a frequency of changes of configurations of the dataset structure.

9. The method of claim 7, wherein a comparably larger RTT results in a comparably larger padding data size.

10. The method of any one of claims 1-9, wherein the datasets are transmitted over the communication channel using at least one of a TCP protocol and a UDP protocol.

11. The method of claim 10, wherein encoded video data of a dataset is transmitted using the TCP protocol and padding data of the dataset is transmitted using the UDP protocol.

12. The method of any one of claims 1-11, wherein the metric indicating a level of network congestion of the communication channel defines one of: packet loss rate, jitter, transmission buffer occupancy, a number or frequency of explicit congestion notifications, or latency.

13. A non-transitory computer-readable storage medium having stored thereon instructions for implementing the method according to any one of claims 1-12 when executed on a camera having processing capabilities.

14. A device for controlling real time video streaming, the device configured for:
providing (S802) a dataset structure for transmission of video data, wherein a dataset generated according to the dataset structure in a first configuration comprises encoded video data (306) with a first encoding bitrate and padding data (304) having a first size;
generating (S804) first datasets (302) according to the dataset structure in the first configuration, and transmitting the first datasets as a data stream via a communication channel (112);
during the transmission of the first datasets, receiving a first metric indicating a level of network congestion of the communication channel, and determining (S806) from the received metric that a level of network congestion has increased above a threshold;
as a result of determining from the received first metric that a level of network congestion has increased above a threshold, adjusting (S808) the dataset structure to a second configuration, wherein a dataset generated according to the adjusted dataset structure comprises encoded video data (312) with a second encoding bitrate and padding data (310) having a second size, wherein the second encoding bitrate is lower than the first encoding bitrate; and
generating (S810) second datasets (308) according to the dataset structure in the second configuration and transmitting the second datasets as a data stream via the communication channel,
wherein the dataset structure defines that the encoded video data is prioritized over padding data during the transmission of the dataset generated according to the dataset structure.

15. The device according to claim 14, implemented in a camera capturing the video data.

## Patentansprüche

1. Verfahren zum Steuern von Echtzeit-Videostreaming, wobei das Verfahren Folgendes umfasst:
Liefern (S802) einer Datensatzstruktur zur Übertragung von Videodaten, wobei ein Datensatz, erzeugt gemäß der Datensatzstruktur in einer ersten Konfiguration, codierte Videodaten (306) mit einer ersten Codierbitrate und Stopfdaten (304), die eine erste Größe aufweisen, umfasst;
Erzeugen (S804) von ersten Datensätzen (302) gemäß der Datensatzstruktur in der ersten Konfiguration und Übertragen der ersten Datensätze als ein Datenstrom über einen Kommunikationskanal (112);
während der Übertragung der ersten Datensätze, Empfangen einer ersten Metrik, die ein Niveau von Netzwerküberlastung des Kommunikationskanals angibt, und Bestimmen (S806) aus der empfangenen ersten Metrik, dass ein Niveau von Netzwerküberlastung über eine Schwelle hinaus zugenommen hat;
als ein Resultat von Bestimmen aus der empfangenen ersten Metrik, dass das Niveau von Netzwerküberlastung über die Schwelle hinaus zugenommen hat, Anpassen (S808) der Datensatzstruktur auf eine zweite Konfiguration, wobei ein Datensatz, erzeugt gemäß der angepassten Datensatzstruktur, codierte Videodaten (312) mit einer zweiten Codierbitrate und Stopfdaten (310), die eine zweite Größe aufweisen, umfasst, wobei die zweite Codierbitrate niedriger als die erste Codierbitrate ist; und
Erzeugen (S810) von zweiten Datensätzen (308) gemäß der Datensatzstruktur in der zweiten Konfiguration und Übertragen der zweiten Datensätze als ein Datenstrom über den Kommunikationskanal,
wobei die Datensatzstruktur definiert, dass codierte Videodaten, während der Übertragung des gemäß der Datensatzstruktur erzeugten Datensatzes, gegenüber Stopfdaten priorisiert werden.

2. Verfahren nach Anspruch 1, ferner umfassend:
als Reaktion auf Bestimmen (S806), dass das Niveau von Netzwerküberlastung über die Schwelle hinaus zugenommen hat:
Anpassen (S902) der Datensatzstruktur auf eine dritte Konfiguration, wobei ein Datensatz, erzeugt gemäß der Datensatzstruktur in der dritten Konfiguration, codierte Videodaten (404) mit der zweiten Codierbitrate und keine Stopfdaten umfasst;
Erzeugen (S904) von dritten Datensätzen (402) gemäß der Datensatzstruktur in der dritten Konfiguration und Übertragen der dritten Datensätze als ein Datenstrom über den Kommunikationskanal;
während der Übertragung der dritten Datensätze, Empfangen einer zweiten Metrik, die ein Niveau von Netzwerküberlastung des Kommunikationskanals angibt, und Bestimmen (S906) aus der empfangenen zweiten Metrik, dass das Niveau von Netzwerküberlastung unter die Schwelle abgenommen hat; und
Anpassen (S808) der Datensatzstruktur auf die zweite Konfiguration.

3. Verfahren nach Anspruch 1, ferner umfassend:
als Reaktion auf Bestimmen (S806), dass das Niveau von Netzwerküberlastung über die Schwelle hinaus zugenommen hat, Anweisen (S1002) eines Videocodierers, Codieren von Videodaten mit der zweiten Codierbitrate zu starten;
Anpassen (S1004) der Datensatzstruktur auf eine vierte Konfiguration, wobei ein Datensatz (502), erzeugt (S1006) gemäß der Datensatzstruktur in der vierten Konfiguration, codierte Videodaten (504) mit der ersten Codierbitrate und keine Stopfdaten umfasst; und
als Reaktion auf Empfangen (S1008) einer Angabe, dass der Videocodierer Videodaten mit der zweiten Codierbitrate codiert, Anpassen (S808) der Datensatzstruktur auf die zweite Konfiguration.

4. Verfahren nach einem der Ansprüche 1-3, ferner umfassend:
während der Übertragung der zweiten Datensätze, Empfangen einer dritten Metrik, die ein Niveau von Netzwerküberlastung des Kommunikationskanals angibt, und Bestimmen (S812) aus der empfangenen dritten Metrik, dass das Niveau von Netzwerküberlastung unter die Schwelle abgenommen hat;
Anpassen (S814) der Datensatzstruktur auf die erste Konfiguration; und
Erzeugen (S816) von vierten Datensätzen (602) gemäß der Datensatzstruktur in der ersten Konfiguration und Übertragen der vierten Datensätze als ein Datenstrom über den Kommunikationskanal.

5. Verfahren nach einem der Ansprüche 1-4, wobei die zweite Größe kleiner als die erste Größe ist.

6. Verfahren nach einem der Ansprüche 1-5, wobei die Datensatzstruktur definiert, dass codierte Videodaten in einem Datensatz, erzeugt gemäß der Datensatzstruktur, vor Stopfdaten positioniert werden.

7. Verfahren nach einem der Ansprüche 1-6, ferner umfassend
Bestimmen einer Größe von Stopfdaten eines Datensatzes, erzeugt gemäß der Datensatzstruktur unter Verwendung mindestens eines der Folgenden:
Übertragungstechnologie des Kommunikationskanals;
eine Größe von codierten Videodaten des Datensatzes, erzeugt gemäß der Datensatzstruktur;
eine Messung, die eine Varianz von verfügbarer Bandbreite des Kommunikationskanals angibt;
eine gemessene Umlaufzeit bzw. RoundTrip Time, RTT, eines Signals, das auf dem Kommunikationskanal übertragen wird; oder
eine Benutzereingabe, die eine Wichtigkeit der Videodaten angibt.

8. Verfahren nach Anspruch 7, ferner umfassend:
Bestimmen der Messung, die eine Varianz der verfügbaren Bandbreite des Kommunikationskanals angibt, unter Verwendung von Verlaufsdaten, die eine Häufigkeit von Änderungen von Konfigurationen der Datensatzstruktur identifizieren.

9. Verfahren nach Anspruch 7, wobei eine vergleichsweise größere RTT zu einer vergleichsweise größeren Stopfdatengröße führt.

10. Verfahren nach einem der Ansprüche 1-9, wobei die Datensätze unter Verwendung von einem TCP-Protokoll und/oder einem UDP-Protokoll über den Kommunikationskanal übertragen werden.

11. Verfahren nach Anspruch 10, wobei codierte Videodaten eines Datensatzes unter Verwendung des TCP-Protokolls und von Stopfdaten des Datensatzes unter Verwendung des UDP-Protokolls übertragen werden.

12. Verfahren nach einem der Ansprüche 1-11, wobei die Metrik, die ein Niveau von Netzwerküberlastung des Kommunikationskanals angibt, eines der Folgenden definiert: Paketverlustrate, Jitter, Übertragungspufferbelegung, eine Anzahl oder Häufigkeit von expliziten Überlastungsbenachrichtigungen oder Latenz.

13. Nicht-transitorisches computerlesbares Speicherungsmedium, das darauf Anweisungen gespeichert hat zum Implementieren des Verfahrens nach einem der Ansprüche 1-12, wenn auf einer Kamera ausgeführt, die Verarbeitungsfähigkeiten aufweist.

14. Vorrichtung zum Steuern von Echtzeit-Videostreaming, wobei die Vorrichtung ausgelegt ist zum:
Liefern (S802) einer Datensatzstruktur zur Übertragung von Videodaten, wobei ein Datensatz, erzeugt gemäß der Datensatzstruktur in einer ersten Konfiguration, codierte Videodaten (306) mit einer ersten Codierbitrate und Stopfdaten (304), die eine erste Größe aufweisen, umfasst;
Erzeugen (S804) von ersten Datensätzen (302) gemäß der Datensatzstruktur in der ersten Konfiguration und Übertragen der ersten Datensätze als ein Datenstrom über einen Kommunikationskanal (112);
während der Übertragung der ersten Datensätze, Empfangen einer ersten Metrik, die ein Niveau von Netzwerküberlastung des Kommunikationskanals angibt, und Bestimmen (S806) aus der empfangenen Metrik, dass ein Niveau von Netzwerküberlastung über eine Schwelle hinaus zugenommen hat;
als ein Resultat von Bestimmen aus der empfangenen ersten Metrik, dass ein Niveau von Netzwerküberlastung über eine Schwelle hinaus zugenommen hat, Anpassen (S808) der Datensatzstruktur auf eine zweite Konfiguration, wobei ein Datensatz, erzeugt gemäß der angepassten Datensatzstruktur, codierte Videodaten (312) mit einer zweiten Codierbitrate und Stopfdaten (310), die eine zweite Größe aufweisen, umfasst, wobei die zweite Codierbitrate niedriger als die erste Codierbitrate ist; und
Erzeugen (S810) von zweiten Datensätzen (308) gemäß der Datensatzstruktur in der zweiten Konfiguration und Übertragen der zweiten Datensätze als ein Datenstrom über den Kommunikationskanal,
wobei die Datensatzstruktur definiert, dass die codierten Videodaten, während der Übertragung des gemäß der Datensatzstruktur erzeugten Datensatzes gegenüber Stopfdaten priorisiert werden.

15. Vorrichtung nach Anspruch 14, implementiert in einer Kamera, die Videodaten aufnimmt.

## Revendications

1. Procédé de commande de flux vidéo en temps réel, le procédé comprenant les étapes suivantes :
fournir (S802) une structure d'ensemble de données pour la transmission de données vidéo, où un ensemble de données généré conformément à la structure d'ensemble de données dans une première configuration comprend des données vidéo codées (306) avec un premier débit binaire de codage et des données de remplissage (304) ayant une première taille ;
générer (S804) des premiers ensembles de données (302) selon la structure d'ensemble de données dans la première configuration, et transmettre les premiers ensembles de données en flux de données par l'intermédiaire d'un canal de communication (112) ;
lors de la transmission des premiers ensembles de données, recevoir une première métrique indiquant un niveau de congestion du réseau du canal de communication, et déterminer (S806) à partir de la première métrique reçue qu'un niveau de congestion du réseau a augmenté au-dessus d'un seuil ;
en conséquence de la détermination, à partir de la première métrique reçue, que le niveau d'encombrement du réseau a augmenté au-dessus du seuil, ajuster (S808) la structure d'ensemble de données à une deuxième configuration, un ensemble de données généré selon la structure d'ensemble de données ajustée comprenant des données vidéo codées (312) avec un deuxième débit binaire de codage et des données de remplissage (310) ayant une deuxième taille, le deuxième débit binaire de codage étant inférieur au premier débit binaire de codage ; et
générer (S810) des deuxièmes ensembles de données (308) conformément à la structure d'ensemble de données dans la deuxième configuration et transmettre les deuxièmes ensembles de données en flux de données par l'intermédiaire du canal de communication,
où la structure d'ensemble de données définit que les données vidéo codées sont priorisées par rapport aux données de remplissage pendant la transmission de l'ensemble de données généré conformément à la structure d'ensemble de données.

2. Procédé selon la revendication 1, comprenant en outre les étapes suivantes :
en réponse à la détermination (S806) que le niveau d'encombrement du réseau a augmenté au-dessus du seuil : ajuster (S902) la structure d'ensemble de données à une troisième configuration, un ensemble de données généré conformément à la structure d'ensemble de données dans la troisième configuration comprenant des données vidéo codées (404) avec le deuxième débit binaire de codage et aucune donnée de remplissage ;
générer (S904) des troisièmes ensembles de données (402) selon la structure d'ensemble de données dans la troisième configuration, et transmettre les troisièmes ensembles de données en flux de données par l'intermédiaire du canal de communication ;
lors de la transmission des troisièmes ensembles de données, recevoir une deuxième métrique indiquant un niveau de congestion du réseau du canal de communication et déterminer (S906), à partir de la deuxième métrique reçue, que le niveau de congestion du réseau a diminué en dessous du seuil ; et
ajuster (S808) la structure de l'ensemble de données à la deuxième configuration.

3. Procédé selon la revendication 1, comprenant en outre les étapes suivantes :
en réponse à la détermination (S806) que le niveau d'encombrement du réseau a augmenté au-dessus du seuil, donner pour instruction (S1002) à un codeur vidéo de commencer le codage des données vidéo avec le deuxième débit binaire de codage ;
ajuster (S1004) la structure d'ensemble de données à une quatrième configuration, un ensemble de données (502) généré (S1006) conformément à la structure d'ensemble de données dans la quatrième configuration comprenant des données vidéo codées (504) avec le premier débit binaire de codage et aucune donnée de remplissage ; et
en réponse à la réception (S1008) d'une indication selon laquelle le codeur vidéo code des données vidéo avec le deuxième débit binaire de codage, ajuster (S808) la structure de l'ensemble de données à la deuxième configuration.

4. Procédé selon l'une quelconque des revendications 1 à 3, comprenant en outre les étapes suivantes :
lors de la transmission des deuxièmes ensembles de données, recevoir une troisième métrique indiquant un niveau de congestion du réseau du canal de communication et déterminer (S812), à partir de la troisième métrique reçue, que le niveau de congestion du réseau a diminué en-dessous du seuil ;
ajuster (S814) la structure de l'ensemble de données à la première configuration ; et
générer (S816) des quatrièmes ensembles de données (602) selon la structure d'ensembles de données dans la première configuration, et transmettre les quatrièmes ensembles de données en flux de données par l'intermédiaire du canal de communication.

5. Procédé selon l'une quelconque des revendications 1 à 4, dans lequel la deuxième taille est inférieure à la première taille.

6. Procédé selon l'une quelconque des revendications 1 à 5, dans lequel la structure d'ensemble de données définit que des données vidéo codées sont positionnées avant les données de remplissage dans un ensemble de données généré conformément à la structure d'ensemble de données.

7. Procédé selon l'une quelconque des revendications 1 à 6, comprenant en outre les étapes suivantes :
déterminer une taille de données de remplissage d'un ensemble de données généré conformément à la structure de l'ensemble de données à l'aide d'au moins l'un des éléments suivants :
la technologie de transmission du canal de communication ;
la taille des données vidéo codées de l'ensemble de données généré conformément à la structure de l'ensemble de données ;
une mesure indiquant une variance de la bande passante disponible du canal de communication ;
le temps d'aller-retour, RTT, mesuré d'un signal transmis sur le canal de communication ; ou
une entrée utilisateur indiquant l'importance des données vidéo.

8. Procédé selon la revendication 7, comprenant en outre les étapes suivantes :
déterminer la mesure indiquant une variance de largeur de bande disponible du canal de communication à l'aide de données historiques identifiant une fréquence de changements de configurations de la structure de l'ensemble de données.

9. Procédé selon la revendication 7, dans lequel un RTT comparativement plus grand conduit à une taille de données de remplissage comparativement plus grande.

10. Procédé selon l'une quelconque des revendications 1 à 9, dans lequel les ensembles de données sont transmis sur le canal de communication en utilisant au moins un protocole parmi un protocole TCP et un protocole UDP.

11. Procédé selon la revendication 10, dans lequel les données vidéo codées d'un ensemble de données sont transmises en utilisant le protocole TCP, et les données de remplissage de l'ensemble de données sont transmises en utilisant le protocole UDP.

12. Procédé selon l'une quelconque des revendications 1 à 11, dans lequel la métrique indiquant un niveau de congestion du réseau du canal de communication définit l'un des éléments suivants : le taux de perte de paquets, la gigue, l'occupation du tampon de transmission, le nombre ou la fréquence des notifications explicites de congestion, ou la latence.

13. Support de stockage non transitoire lisible par ordinateur sur lequel sont stockées des instructions permettant, lorsqu'elles s'exécutent sur une caméra dotée de capacités de traitement, la mise en œuvre du procédé selon l'une quelconque des revendications 1 à 12.

14. Dispositif de commande de flux vidéo en temps réel, le dispositif étant configuré pour :
fournir (S802) une structure d'ensemble de données pour la transmission de données vidéo, où un ensemble de données généré conformément à la structure d'ensemble de données dans une première configuration comprend des données vidéo codées (306) avec un premier débit binaire de codage et des données de remplissage (304) ayant une première taille ;
générer (S804) des premiers ensembles de données (302) selon la structure d'ensemble de données dans la première configuration, et transmettre les premiers ensembles de données en flux de données par l'intermédiaire d'un canal de communication (112) ;
lors de la transmission des premiers ensembles de données, recevoir une première métrique indiquant un niveau de congestion du réseau du canal de communication, et déterminer (S806) à partir de la métrique reçue qu'un niveau de congestion du réseau a augmenté au-dessus d'un seuil ;
en conséquence de la détermination, à partir de la première métrique reçue, qu'un niveau d'encombrement du réseau a augmenté au-dessus d'un seuil, ajuster (S808) la structure d'ensemble de données à une deuxième configuration, un ensemble de données généré selon la structure d'ensemble de données ajustée comprenant des données vidéo codées (312) avec un deuxième débit binaire de codage et des données de remplissage (310) ayant une deuxième taille, le deuxième débit binaire de codage étant inférieur au premier débit binaire de codage ; et
générer (S810) des deuxièmes ensembles de données (308) conformément à la structure d'ensemble de données dans la deuxième configuration et transmettre les deuxièmes ensembles de données en flux de données par l'intermédiaire du canal de communication,
où la structure d'ensemble de données définit que les données vidéo codées sont priorisées par rapport aux données de remplissage pendant la transmission de l'ensemble de données généré conformément à la structure d'ensemble de données.

15. Dispositif selon la revendication 14, mis en œuvre dans une caméra capturant les données vidéo.
